# EUROPEAN PATENT SPECIFICATION

(11) **EP 1 374 237 B1**
(45) Date of publication and mention of the grant of the patent: **09.11.2005**
(21) Application number: 02721303.2
(22) Date of filing: 07.03.2002
(51) Int. Cl.: G11B 20/00, H04N 7/167

(54) **METHOD AND SYSTEM FOR PROVIDING BUS ENCRYPTION BASED ON CRYPTOGRAPHIC KEY EXCHANGE**
VERFAHREN UND SYSTEM ZUR BEREITSTELLUNG VON BUSVERSCHLÜSSELUNG BASIEREND AUF EINEM KRYPTOGRAPHISCHEN SCHLÜSSELAUSTAUSCH
PROCEDE ET SYSTEME POUR ASSURER LE CHIFFREMENT D'UN BUS SUR LA BASE D'ECHANGE DE CLES CRYPTOGRAPHIQUES

(30) Priority: 29.03.2001 US 823423
(43) Date of publication of application: 02.01.2004
(73) Proprietor: INTEL CORPORATION, Santa Clara, CA 95052 (US)
(72) Inventor: TRAW, Brendan, Portland, OR 97229 (US); RIPLEY, Mike, Hillsboro, OR 97124 (US)
(74) Representative: Molyneaux, Martyn William
(86) International application number: PCT/US2002/007085
(87) International publication number: WO 2002/080170

(56) References cited:
- EP-A- 0 984 346
- EP-A- 1 081 616
- WO-A-00/57636
- INTEL CORPORATION ET AL: "Content Protection for Recordable Media Specification: DVD Book, Revision 0.94" CONTENT PROTECTION FOR RECORDABLE MEDIA SPECIFICATION: DVD BOOK, REVISION 0.94, 18 October 2000 (2000-10-18), XP002167964

## Description

### BACKGROUND OF THE INVENTION

### Field of the Invention

The present invention generally relates to encrypting and decrypting data transmitted over a data bus, and in particular, to a method and system for protecting digital content stored on a storage medium from unauthorized copying.

### Description of the Related Art

A variety of techniques are available for protecting digital contents stored on a storage medium from unauthorized copying such as scrambling and encryption/ decryption techniques. However, the integrity of some copy protection techniques has been compromised and such copy protection techniques are no longer effective against unauthorized copying of copyrighted material. For example, in the field of digital versatile disc (DVD) technology, the integrity of content scramble system (CSS) for scrambling DVD video contents has been recently compromised by hackers, and software programs are now available that can descramble the contents of CSS-protected DVDs, using a computer equipped with a DVD-ROM drive.

Additionally, digital contents on a storage medium is usually transmitted from a storage device (i.e., any device capable of accessing data from a storage medium) to a host device (i.e., any device capable of retrieving data from the storage device) over a data bus in a form that can be captured by anyone having the proper equipment Although the data transmitted may not be in its original digital form (i.e., data may be encrypted and/or scrambled), a copy of the encrypted and/or scrambled data captured at the time of the transmission may still be playable by presenting the encrypted data to a host device as though it was coming from a legitimate storage device.

Document EP-A-1081616 discloses an SD memory card storing a media key block and a media ID, which is connected to a device. Authentication and key exchange (AKE) processing units perform mutual authentication between the connected device and the SD memory card, by which the device generates a random number (nonce), encrypts the random number using an internal (device) key and transmits the encrypted random number to the SD memory card as a challenge value. The memory card decrypts the challenge value with its internal key and returns it to the connected device for verification. Similarly, authentication is performed by the SD memory card and another challenge value is created. If mutual authentication is verified, the AKE processing units perform an exclusive OR of both challenge values and obtain a session key by decrypting the exclusive OR using the internal key. WO 00/57636 discloses a content protection controller module which includes software drivers that allow a smart card reader to communicate with other modules via a bus and also includes cryptographic functions and processes. The smart card can be authenticated by a module sending a challenge nonce (e.g. random number generated by the module) to the smart card. The smart card responds to the challenge by digitally signing the received random number using a private key of a key pair. The module verifies the respond using the public key of a key pair.

### BRIEF DESCRIPTION OF THE DRAWINGS

Figure 1 is a block diagram of a system for protecting digital content stored on a storage medium from copying according to one embodiment of the present invention.

Figure 2 is a block diagram of a system for protecting DVDs from malicious copying according to one embodiment of the invention.

Figure 3 is a flowchart of encrypting data prior to transmitting the data over a bus according to one embodiment of the invention.

Figure 4 is a flowchart of decrypting data transmitted over a bus according to one embodiment of the invention.

Figure 5 is a flowchart of decrypting and descrambling DVD contents according to one embodiment of the invention.

### DETAILED DESCRIPTION OF THE INVENTION

In the following description, specific details are set forth in order to provide a thorough understanding of the present invention. However, it will be apparent to one skilled in the art that the present invention may be practiced without these specific details. In other instances, well-known circuits, structures and techniques have not been shown in detail in order to avoid obscuring the present invention.

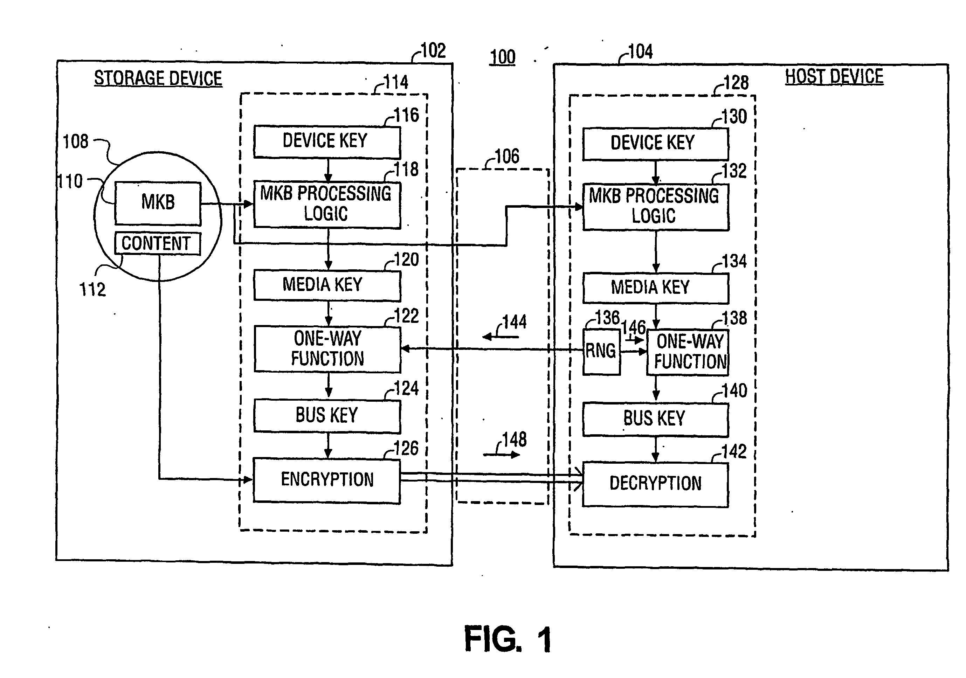

Figure 1 depicts a system 100 for protecting digital content stored on a storage medium from copying according to one embodiment of the present invention. The copy protection system 100 includes a storage device 102 coupled to a host device 104 via a data bus 106 to enable transmission of data (e.g., encrypted and/or non-encrypted data) between the storage and host devices through the bus. The storage device 102 may be any device capable of accessing data from a storage medium 108. The host device 104 may be any device capable of retrieving data from the storage device 102. The storage device 102 may be a stand-alone device arranged in an enclosure separate from the host device 104 or alternatively, the storage device 102 and the host device 104 may be combined into one enclosure. The storage medium 108 placed within the storage device 102 may be any type of a removable or non-removable storage medium suitable for storing digital content including, but not limited to, digital versatile discs (DVDs), CD-ROMs, optical discs, magneto-optical discs, flash-based memory, floppy disks, hard drives, read-only memories (ROMs), random access memories (RAMs), EPROMs, EEPROMs, magnetic or optical cards.

To implement the copy protection system 100, media manufacturers will place a key distribution data block (e.g., media key block "MKB" 110) generated by an authorized entity (i.e., an entity responsible for establishing and administering the copy protection system) on each piece of storage media. In one embodiment, the MKB 110 is a block of encrypted keys that can be embedded in a storage medium such that storage devices that access the content from the storage medium are able to process portion(s) of the MKB to compute a secret key that can be used to encrypt the data prior to transmitting the data over the bus. The host device that plays the content from the storage medium also accesses and processes portion(s) of the MKB to compute the same secret key to properly decrypt the data transmitted over the bus.

As seen by referring to figure 1, the storage device 102 includes an encryption subsystem 114 according to one embodiment of the invention to encrypt the content read from the storage medium 108 prior to transmitting the data over the bus 106 to the host device 104 to prevent unauthorized copying. Included in the encryption system 114 is a set of device keys 116, a MKB processing logic 118, a one-way function 122 and an encryption logic 126. The set of device keys 116 has been assigned to each storage device when manufactured. These device keys are provided by the authorized entity and are used by the MKB processing logic 118 to process portion(s) of the MKB 110 embedded in the storage medium 108 to compute a secret media key 120. The device keys 116 may either be unique to each individual storage device, or used commonly by multiple storage devices. In one embodiment, the MKB, the device keys and the MKB processing logic are configured such that the same secret media key will be generated regardless of which compliant device is used to access the storage medium so long as its device keys have not been compromised.

The host device 104 connected to the storage device 102 includes a decryption subsystem 128 according to one embodiment of the invention to decrypt the data supplied from the storage device. Included in the decryption subsystem 128 are its own set of device keys 130 and a MKB processing logic 132 to process the MKB 110 using its own set of device keys to compute a secret media key 134. Although the set of device keys 130 assigned to the host device 104 may be different from the device keys 116 assigned to the storage device 102, the media key 134 generated by the host device 104 will be the same as the media key 120 generated by the storage device 102 provided that neither sets of device keys have been compromised.

Also included in the copy protection system 100 is a random number generator 136 to generate a random or sequential number (referred hereinafter as "nonce") and send a copy of it to the storage device 102. The storage device 102 combines the nonce 144 received from the host device 104 with the media key 120 using the one-way function 122 and returns the result (i.e., bus key 124) to the encryption logic 126. The one-way function 122 is configured such that the bus key 124 can be generated by inputting the media key 120 and the nonce 144, however, determining the media key 120 from the bus key 124 and nonce 144 is computationally infeasible. When the nonce 144 is supplied from the host device 104 to the storage device 102, the nonce 146 is also accessed by the one-way function 138 residing within the host device 104 to combine the media key 134 and the nonce 146 to produce its own bus key 140 to be used by the decryption logic 142. It should be noted that since the same one-way function is used by the storage device 102 and host device 104, both storage and host devices will generate the same bus key provided that same media key and nonce was used by both devices to generate the bus key.

In one embodiment, some sort of a tamper resistant scheme is employed to tightly couple the logical components within the encryption subsystem 114 and the decryption subsystem 128 so that secret keys and data flowing between the logical components are not accessible from outside. In this regard, the data flowing within the encryption and decryption subsystems are protected by a tamper resistant scheme; however, the data bus 106 connecting the storage device 102 to the host device 104 may be unsecured and may be susceptible to access by an attacker. To protect the data transmitted over the data bus 106 which may be non-secured against malicious copying, the digital content 112 read from the storage medium 108 is encrypted by the encryption logic 126 with the bus key 124 prior to transmitting over the data bus 106 to the host device 104. In this regard, only the host device 104 with the correct bus key can properly decrypt the encrypted data 148 transmitted over the bus 106.

Advantageously, the copy protection system 100 of the present invention is effective in resisting against "Replay" attack. In replay attack, an attacker reroutes the encrypted data 148 going from the storage device 102 to the host device 104 and records the encrypted data onto a recordable medium. Additionally, when the host device 104 accesses the MKB 110 embedded in the storage medium 108, the attacker also records the MKB 110 onto the same recordable medium. The copy of the MKB 110 and encrypted data 148 captured at the time of transmission may be played on a conventional media player system by presenting the encrypted data to the host device as though it was coming from a legitimate storage device. However, in the present invention, since the nonce value used by the host device to generate its decryption bus key during replay of the enciphered data will be different than the nonce value used by the storage device to generate its encryption bus key at the time of enciphering, this type of replay attack will be prevented. In other words, by using the nonce to generate the bus keys, the bus key 140 obtained by the host device 104 during subsequent access of the enciphered data will most likely be different than the bus key 124 that was previously used to encrypt the enciphered data and therefore the host device will not be able to properly decrypt the enciphered data.

In one implementation, if a set of device keys is compromised in a way that threatens the integrity of the copy protection system, new media can be released containing an updated MKB that causes the compromised set of device keys to calculate an incorrect media key, thereby revoking its ability to work with the new media. This means that devices with the compromised set of device keys will no longer function with new media while other existing compliant devices with valid device keys will continue to work with new media.

It should be noted that there are a variety of ways to derive a secret key from public key distribution system and that the usage of media key block (MKB) is just one example of distributing cryptographic keys and the details of public key management may vary among different applications. In this regard, other types of public key distribution system can be utilized with the copy protection system of the present invention. Such is within the scope and contemplation of the present invention.

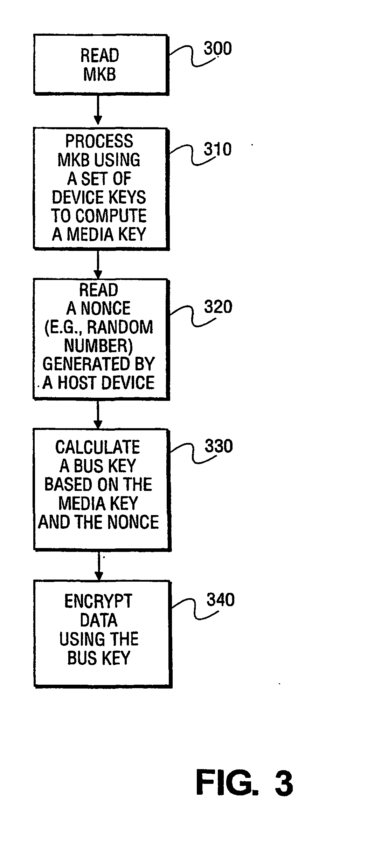

Referring to Figure 3, the operations of encrypting data prior to transmitting the data over a bus according to one embodiment of the invention are shown. When a compliant storage medium is placed within the storage device, the MKB processing logic responsible for computing a media key accesses the MKB from the storage medium (block 300). Then, the MKB processing logic generates a media key using a set of device keys assigned to the storage device and the MKB read from the storage medium (block 310). In one implementation, the MKB comprises a block of encrypted data, where each encrypted data is a secret media key encrypted with a different key. Each device key may be data of a predefined bit size (e.g., 56 bit data) that includes an index number used to indicate which encrypted data within the MKB data block the device key is configured to decrypt By decrypting the designated portion of the MKB using the device key, a secret media key may be obtained. This means that the secret media key contained in the MKB can be obtained by any device that has a legitimate set of device keys. After the compliant storage medium has been placed in the storage device and prior to any encryption taking place, the host device generates a nonce (e.g., a random number) and sends the nonce to the storage device. The encryption subsystem receives the nonce sent by the host device (block 320) and combines it with the media key obtained above using a one-way function to produce a bus key (block 330). Using the bus key obtained, the encryption subsystem encrypts the digital content read from the storage medium and outputs the encrypted data to the host device through the bus (block 340).

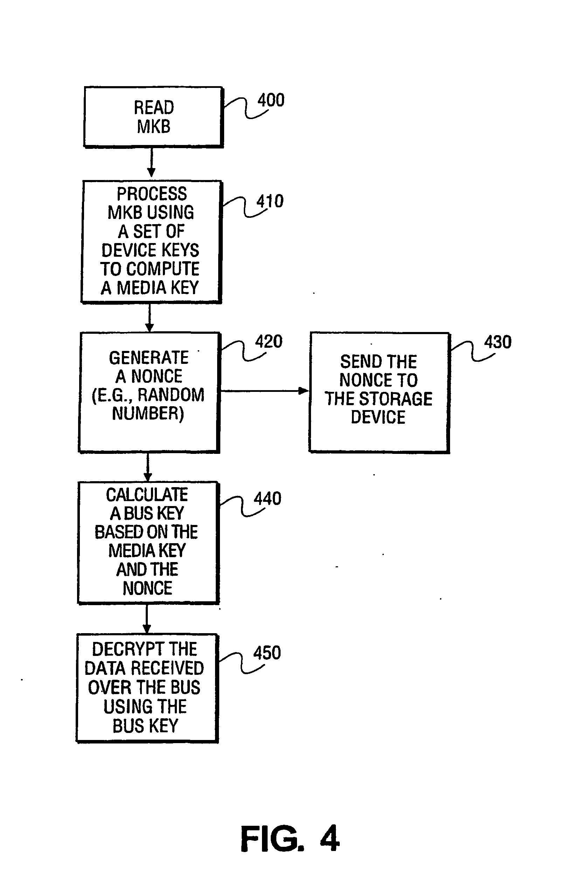

Referring to Figure 4, the operations of decrypting data transmitted over a bus according to one embodiment of the invention are shown. When the host device needs to access the storage medium in the storage device, the MKB processing logic residing within the decryption subsystem of the host device reads the MKB from the storage medium (block 400). Then in block 410, the MKB processing logic generates a media key using a set of device keys assigned to the host device and the MKB read from the storage medium. As noted earlier, the decryption subsystem generates a nonce (block 420) and sends a copy of it to the encryption subsystem (block 430) and sends another copy of it to the one-way function of the decryption subsystem. Then, the decryption subsystem combines the nonce and the media key by using the one-way function to produce a bus key (block 440). The bus key is used by the decryption subsystem to decrypt the encrypted data transmitted over the bus (block 450).

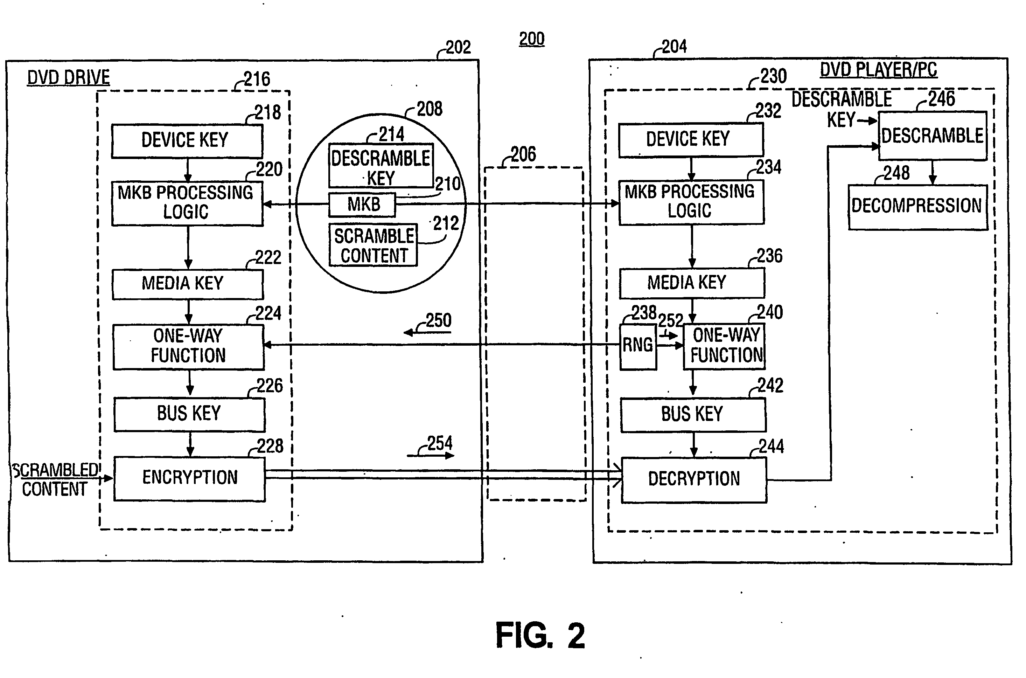

Figure 2 depicts a system 200 for protecting digital versatile discs (DVDs) from unauthorized copying according to one embodiment of the invention. In this embodiment, the copy protection system 200 uses the media key block (MKB) 210 as described above to patch scrambled contents 212 of DVD 208 to provide additional copy protection. In this regard, the format of new compliant DVDs may remain unchanged (i.e., content scramble system (CSS) scrambling is still used), except that a MKB 210 is introduced as a new data element on the disc. As noted earlier, the MKB 210 is a block of encrypted data that allows different devices using different individually-assigned device keys to extract a common secret key, called the media key. The usage of MKB 210 to patch scrambled DVD data 212 enables a protection system to be renewed (i.e., if a set of device keys is compromised in the future, a new MKB can be used that excludes just that set of compromised device keys from the system).

As part of the copy protection system 200 of the invention, new compliant DVD drives 202 are equipped with device keys 218, MKB processing logic 220, one-way function 224 and encryption logic 228 necessary to process the MKB and extract its secret media key 222, to calculate a bus key 226 based on the media key 222 and a nonce 250, and encrypt the data 212 on the DVD 208, which is CSS scrambled, using the bus key 226. The DVD video player software 230 of the host computer 204 (e.g., host PC or DVD player) is also equipped with these additional features to access and process MKB 210 using its own set of device keys 232 to compute a secret media key 236, to calculate a bus key 242 based on the media key 236 and the nonce 252, and decrypt the data 254 transmitted by the DVD drive 202 using the bus key 242.

When a new compliant DVD-Video disc 208 is inserted into the DVD drive 202, the following key exchange procedure occurs between the DVD drive 202 and host PC 204. The DVD drive 202 reads the MKB 210 and uses its device keys 218 to calculate the media key 222. The DVD video player software 230 running on the host PC 204 sends the necessary command to the DVD drive 202 to allow it to also read the MKB 210 and use its device keys 232 to calculate the media key 236. The DVD video player software 230 selects a number (nonce) at random 238, and sends that number to the DVD drive 202 using a predefined command. The DVD drive 202 and DVD video player software 230 both calculate a common bus key 226, 242, which is derived from a cryptographic one-way function of the media key and nonce. Subsequently, the DVD video player software 230 sends requests to the DVD drive 202 to read the descramble keys 214 (e.g., CSS keys) and CSS-scrambled content 212 from the disc 208. Before sending the CSS keys 214 or CSS-scrambled content 212 to the host PC 204, the DVD drive 202 first encrypts them using a robust cipher and the bus key 226. Upon receipt of the data, the DVD video player software 230 decrypts them using the same cipher and bus key 242 and forwards the data to the descramble logic 246. The descramble logic 246 uses the descramble keys 214 to descramble the data and forwards the data to a decompression logic 248.

For the calculation of the media key and bus key, and for the bus encryption and decryption of the CSS keys and CSS-scrambled content, a robust cipher with a large key size is used. In one implementation, the cipher is the C2 cipher, and the key size is 56 bits.

In this embodiment, the copy protection system of the present invention dramatically improves the protection for DVD-Video content by "wrapping" a robust protection scheme around the old CSS scheme. This is accomplished in a simple and novel way, using MKB technology to provide for renewal in the event that device keys are compromised in the future, and adding a nonce to protect against replay attacks.

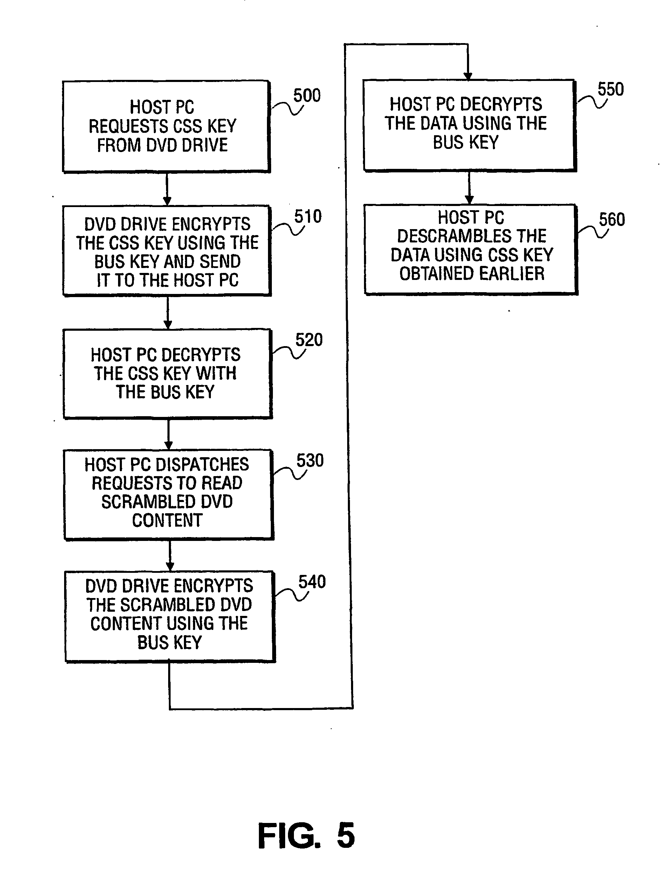

Referring to Figure 5, the operations of decrypting and descrambling DVD contents according to one embodiment of the invention are shown. When a DVD is inserted in the DVD-ROM drive, the DVD video player software running in the host PC may request descramble keys or secret data (e.g., CSS keys) required for descrambling the scrambled content from the DVD drive (block 500). Then in block 510, the DVD drive encrypts the CSS keys read from the disc with bus key and sends them to the host PC. The CSS keys are encrypted prior to sending them over the bus to the host PC. The CSS keys are encrypted using the bus key that can also be computed by the host PC having a set of non-compromised device keys as previously discussed. In this regard, once the encrypted CSS keys have been received, the DVD video player software running in the host PC decrypts the CSS keys with the bus key (block 520). Then in block 530, the DVD video player software dispatches requests to read the CSS-scrambled content to the DVD drive. Before sending the content to the host PC, the DVD drive encrypts the scrambled content using the bus key and sends the encrypted data to the host PC (block 540). Upon receipt of the content, the DVD video player software first decrypts the data using the bus key (block 550). The output of the decryption logic is supplied to the descramble logic which performs the CSS descramble process using the DSS keys obtained earlier (block 560).

The scope of the present invention is to be defined as set forth in the appended claims.

## Claims

1. A system comprising:
a number generator (136) to generate a nonce (144); and
an encryption subsystem (126) to encrypt data accessed from a storage medium (108) containing a key distribution data block (110) using an encryption bus key (124) prior to transmitting the encrypted data via a data bus (106), wherein said encryption bus key is derived based on at least a portion of the key distribution data block, at least one device key (116) assigned to said encryption subsystem and the nonce generated by the number generator.

2. The system of claim 1, further comprising a decryption subsystem (142) coupled to said data bus to decrypt said encrypted data received over the data bus using a decryption bus key (140) derived based on at least a portion of the key distribution data block, at least one device key (130) assigned to said decryption subsystem and the nonce generated by the number generator.

3. The system of claim 1, wherein said encryption subsystem comprises:
a processing logic (118) to process at least a portion of the key distribution data block read from the storage medium using the at least one device key assigned to said encryption subsystem to compute a media key (120);
a one-way function (122) to generate the encryption bus key based on the media key and the nonce generated by the number generator; and
an encryption logic to encrypt data accessed from said storage medium using said encryption bus key.

4. The system of claim 2, wherein said decryption subsystem comprises:
a processing logic (132) to process at least a portion of the key distribution data block read from the storage medium using the at least one device key assigned to said decryption subsystem to compute a media key (134);
a one-way function (138) to generate the decryption bus key based on said media key and the nonce (146) generated by the number generator; and
a decryption logic to decrypt data transmitted over the data bus by using said decryption bus key.

5. The system of claim 1, wherein said data transmitted over the data bus is encrypted using the bus key derived based on the nonce generated by the number generator such that if said data is recorded at the time of transmission, said recorded data is not subsequently playable by a decryption subsystem that does not have access to the same nonce used by said encryption subsystem to encrypt said data transmitted over the data bus.

6. The system of claim 2, wherein said key distribution data block is embodied in the form of a media key block comprising a block of encrypted data.

7. The system of claim 2, wherein said encryption subsystem is implemented in a storage device (102) capable of accessing data from a storage medium and said decryption subsystem is implemented in a host device (104) capable of retrieving data from said storage device.

8. The system of claim 2, wherein said media key computed by the said encryption subsystem will be the same as the media key computed by the decryption subsystem provided that neither the device key assigned to the encryption subsystem nor the device key assigned to the decryption subsystem have been compromised.

9. The system of claim 2, wherein said storage medium is selected from a digital versatile disc (DVD), CD-ROM, optical disc, magneto-optical disc, flash-based memory, magnetic card and optical card.

10. The system of claim 2, wherein said number generator is a random number generator residing within said decryption subsystem.

11. A method comprising:
a storage device reading a key distribution data block from a storage medium;
the storage device processing at least a portion of said key distribution data block using at least one device key to compute a media key;
the storage device fetching a nonce generated by a number generator;
the storage device combining said nonce with said media key using a one-way function to generate a bus key;
the storage device encrypting data read from the storage medium using the bus key generated by the storage device; and
the storage device transmitting the encrypted data over a data bus.

12. The method of claim 11, wherein said data transmitted over the data bus is encrypted using the bus key derived based on the nonce generated by the number generator such that if said data is recorded at the time of transmission, said recorded data is not subsequently playable by a host device that does not have access to the same nonce used by the storage device to encrypt said data transmitted over the data bus.

13. The method of claim 11, further comprising decrypting the encrypted data received over the data bus.

14. The method of claim 13, wherein said decrypting the encrypted data received over the data bus comprises:
a host device reading the key distribution data block from the storage medium;
the host device processing at least a portion of the key distribution data block using at least one device key to compute a media key;
the host device fetching the nonce generated by the number generator;
the host device combining said media key with the nonce using a one-way function to generate a bus key; and
the host device decrypting said encrypted data received over the data bus using the bus key generated by the host device.

15. The method of claim 14, further comprising:
the host device requesting a descramble key required for descrambling scrambled content from said storage device;
the storage device encrypting said descramble key read from said storage medium with said bus key generated by said storage device and sending said encrypted descramble key to the host device;
the host device decrypting said encrypted descramble key received from said storage device using said bus key generated by said host device.
the host device descrambling said decrypted data using said descramble key decrypted by said host device.

16. The method of claim 11, wherein said key distribution data block is embodied in the form of a media key block comprising a block of encrypted data.

17. The method of claim 14, wherein said number generator is a random number generator residing within the host device.

18. An apparatus comprising:
a storage device to access a storage medium containing data and a key distribution data block, said storage device including a processing logic, a one-way function and an encryption logic, wherein said processing logic processes at least a portion of said key distribution data block using a device key assigned to said storage device to compute a media key, said one-way function combines said media key with a nonce generated by a number generator to produce a bus key and said encryption logic encrypts said data accessed from said storage medium using said bus key prior to transmitting the encrypted data via a data bus.

19. The apparatus of claim 18, further comprising a host device coupled to said storage device via said data bus, said host device including a processing logic, a one-way function and a decryption logic, wherein said processing logic processes at least a portion of said key distribution data block using a device key assigned to said host device to compute a media key, said one-way function combines said media key with said nonce generated by said number generator to produce a bus key and said decryption logic decrypts said encrypted data received over the data bus using said bus key.

20. The apparatus of claim 18, wherein said data transmitted over the data bus is encrypted using the bus key derived based on the nonce generated by the number generator such that if said data is recorded at the time of transmission, said recorded data is not subsequently playable by a host device that does not have access to the same nonce used by said storage device to encrypt said data transmitted over the data bus.

## Patentansprüche

1. System, das folgendes umfasst:
einen Zahlengenerator (136) zur Erzeugung einer Nonce (144); und
ein Verschlüsselungs-Teilsystem (126) zur Verschlüsselung von Daten, auf die über ein Speichermedium (108) zugegriffen wird, das einen Schlüsselverteilungs-Datenblock (110) aufweist, unter Verwendung eines Verschlüsselungs-Busschlüssels (124) vor der Übertragung der verschlüsselten Daten über einen Datenbus (106), wobei der genannte Verschlüsselungs-Busschlüssel zumindest teilweise auf der Basis eines Abschnitts des Schlüsselverteilungs-Datenblocks abgeleitet wird, wobei mindestens ein Vorrichtungsschlüssel (116) dem genannten Verschlüsselungs-Teilsystem und der durch den Zahlengenerator erzeugten Nonce zugeordnet ist.

2. System nach Anspruch 1, wobei dieses ferner ein Entschlüsselungs-Teilsystem (142) umfasst, das mit dem genannten Datenbus gekoppelt ist, um die genannten verschlüsselten Daten zu entschlüsseln, die über den Datenbus empfangen werden, und zwar unter Verwendung eines Entschlüsselungs-Busschlüssels (140), der zumindest teilweise auf der Basis eines Abschnitts des Schlüsselverteilungs-Datenblocks hergeleitet wird, wobei mindestens ein Vorrichtungsschlüssel (130) dem genannten Entschlüsselungs-Teilsystem und der durch den Zahlengenerator erzeugten Nonce zugeordnet ist.

3. System nach Anspruch 1, wobei das genannte Verschlüsselungs-Teilsystem folgendes umfasst:
eine Verarbeitungslogik (118) zur Verarbeitung zumindest eines Teils des Schlüsselverteilungs-Datenblocks, der aus dem Speichermedium ausgelesen wird, unter Verwendung des zumindest einen Vorrichtungsschlüssels, der dem genannten Verschlüsselungs-Teilsystem zugeordnet ist, um einen Medienschlüssel (120) zu berechnen;
eine Einwegfunktion (122) zum Erzeugen des Verschlüsselungs-Busschlüssels auf der Basis des Medienschlüssels und die Nonce, die durch den Zahlengenerator erzeugt wird; und
eine Verschlüsselungslogik zur Verschlüsselung von Daten, auf die über das genannte Speichermedium unter Verwendung des genannten Verschlüsselungs-Busschlüssels zugegriffen wird.

4. System nach Anspruch 2, wobei das genannte Entschlüsselungs-Teilsystem folgendes umfasst:
eine Verarbeitungslogik (132) zur Verarbeitung mindestens eines Teils des Schlüsselverteilungs-Datenblocks, der aus dem Speichermedium ausgelesen wird, unter Verwendung des mindestens einen Vorrichtungsschlüssels, der dem genannten Entschlüsselungs-Teilsystem zugeordnet ist, um einen Medienschlüssel (134) zu berechnen;
eine Einwegfunktion (138) zum Erzeugen des Entschlüsselungs-Busschlüssels auf der Basis des genannten Medienschlüssels und der durch den Zahlengenerator erzeugten Nonce (146); und
eine Entschlüsselungslogik zur Entschlüsselung von über den Datenbus übertragenen Daten unter Verwendung des genannten Entschlüsselungs-Busschlüssels.

5. System nach Anspruch 1, wobei die genannten über den Datenbus übertragenen Daten unter Verwendung des Busschlüssels verschlüsselt werden, der auf der Basis der durch den Zahlengenerator erzeugten Nonce verschlüsselt wird, so dass bei einer Aufzeichnung der genannten Daten zum Zeitpunkt der Übertragung die genannten aufgezeichneten Daten in der Folge nicht durch ein Entschlüsselungs-Teilsystem wiedergegeben werden können, das keinen Zugriff auf die gleiche Nonce aufweist, die von dem genannten Verschlüsselungs-Teilsystem zur Verschlüsselung der genannten über den Datenbus übertragenen Daten verwendet wird.

6. System nach Anspruch 2, wobei der genannte Schlüsselverteilungs-Datenblock in Form eines Medienschlüsselblocks ausgeführt wird, der einen Block verschlüsselter Daten umfasst.

7. System nach Anspruch 2, wobei das genannte Verschlüsselungs-Teilsystem in einer Speichervorrichtung (102) implementiert ist, die auf Daten von einem Speichermedium zugreifen kann, und wobei das genannte Entschlüsselungs-Teilsystem in einer Host-Vorrichtung (104) implementiert ist, die Daten von der genannten Speichervorrichtung abrufen kann.

8. System nach Anspruch 2, wobei der genannte durch das genannte Verschlüsselungs-Teilsystem berechnete Medienschlüssel mit dem Medienschlüssel übereinstimmt, der durch das Entschlüsselungs-Teilsystem berechnet wird, vorausgesetzt, dass weder der dem Verschlüsselungs-Teilsystem zugeordnete Vorrichtungsschlüssel noch der dem Entschlüsselungs-Teilsystem zugeordnete Vorrichtungsschlüssel kompromittiert worden sind.

9. System nach Anspruch 2, wobei das genannte Speichermedium unter einer Digital Versatile Disc (DVD), CD-ROM, optischen Disc, magnetooptischen Disc, einem Flash-Speicher, einer Magnetkarte und einer optischen Karte ausgewählt wird.

10. System nach Anspruch 2, wobei es sich bei dem genannten Zahlengenerator um einen Zufallszahlengenerator handelt, der sich in dem genannten Entschlüsselungs-Teilsystem befindet.

11. Verfahren, das folgendes umfasst:
eine Speichervorrichtung, die einen Schlüsselverteilungs-Datenblock aus einem Speichermedium ausliest;
wobei die Speichervorrichtung mindestens einen Teil des genannten Schlüsselverteilungs-Datenblocks unter Verwendung mindestens eines Vorrichtungsschlüssels zur Berechnung eines Medienschlüssels verarbeitet;
wobei die Speichervorrichtung eine durch einen Zahlengenerator erzeugte Nonce erfasst;
wobei die Speichervorrichtung die genannte Nonce unter Verwendung mit einer Einwegfunktion mit dem genannten Medienschlüssel kombiniert, um einen Busschlüssel zu erzeugen;
wobei die Speichervorrichtung aus dem Speichermedium unter Verwendung eines Busschlüssels, der durch die Speichervorrichtung erzeugt worden ist, ausgelesene Daten verschlüsselt; und
wobei die Speichervorrichtung die verschlüsselten Daten über einen Datenbus überträgt.

12. Verfahren nach Anspruch 11, wobei die genannten über den Datenbus übertragenen Daten unter Verwendung des Busschlüssels verschlüsselt werden, der auf der Basis der durch den Zahlengenerator erzeugten Nonce hergeleitet wird, so dass bei einer Aufzeichnung der genannten Daten zum Zeitpunkt der Übertragung die genannten aufgezeichneten Daten in der Folge nicht von einer Host-Vorrichtung wiedergegeben werden können, die keinen Zugriff auf die gleiche von der Speichervorrichtung verwendete Nonce besitzt, um die genannten über den Datenbus übertragenen Daten zu verschlüsseln.

13. Verfahren nach Anspruch 11, wobei dieses ferner das Entschlüsseln der über den Datenbus empfangenen verschlüsselten Daten umfasst.

14. Verfahren nach Anspruch 13, wobei das genannte Entschlüsseln der über den Datenbus empfangenen verschlüsselten Daten folgendes umfasst:
eine Host-Vorrichtung, welche den Schlüsselverteilungs-Datenblock aus dem Speichermedium liest;
wobei die Host-Vorrichtung zumindest einen Teil des Schlüsselverteilungs-Datenblocks unter Verwendung mindestens eines Vorrichtungsschlüssels verarbeitet, um einen Medienschlüssel zu berechnen;
wobei die Host-Vorrichtung die durch den Zahlengenerator erzeugte Nonce erfasst;
wobei die Host-Vorrichtung den genannten Medienschlüssel mit der Nonce unter Verwendung einer Einwegfunktion kombiniert, um einen Busschlüssel zu erzeugen; und
wobei die Host-Vorrichtung die genannten über den Datenbus empfangenen verschlüsselten Daten unter Verwendung des durch die Host-Vorrichtung erzeugten Busschlüssels entschlüsselt.

15. Verfahren nach Anspruch 14, wobei das Verfahren ferner folgendes umfasst:
das Anfordern eines Entwürfelungsschlüssels durch die Host-Vorrichtung, um verwürfelten Inhalt der genannten Speichervorrichtung zu entwürfeln;
wobei die Speichervorrichtung den aus dem genannten Speichermedium mit dem durch die genannte Speichervorrichtung erzeugten genannten Busschlüssel ausgelesenen Entwürfelungsschlüssel verschlüsselt und den genannten verschlüsselten Entwürfelungsschlüssel zu der Host-Vorrichtung überträgt;
wobei die Host-Vorrichtung den genannten von der genannten Speichervorrichtung unter Verwendung des durch die genannte Host-Vorrichtung erzeugten genannten Busschlüssels verschlüsselten Entwürfelungsschlüssel entschlüsselt;
wobei die Host-Vorrichtung die genannten entschlüsselten Daten unter Verwendung des durch die genannte Host-Vorrichtung entschlüsselten genannten Entwürfelungsschlüssels entwürfelt.

16. Verfahren nach Anspruch 11, wobei der genannte Schlüsselverteilungs-Datenblock in Form eines Medienschlüsselblocks ausgeführt ist, der einen Block verschlüsselter Daten umfasst.

17. Verfahren nach Anspruch 14, wobei es sich bei dem genannten Zahlengenerator um einen Zufallszahlengenerator handelt, der sich in dem genannten Entschlüsselungs-Teilsystem befindet.

18. Vorrichtung, die folgendes umfasst:
eine Speichervorrichtung für den Zugriff auf ein Speichermedium, das Daten und einen Schlüsselverteilungs-Datenblock aufweist, wobei die genannte Speichervorrichtung eine Verarbeitungslogik, eine Einwegfunktion und eine Verschlüsselungslogik aufweist, wobei die genannte Verarbeitungslogik mindestens einen Teil des genannten Schlüsselverteilungs-Datenblocks unter Verwendung eines Vorrichtungsschlüssels verarbeitet, der der genannten Speichervorrichtung zugeordnet ist, um einen Medienschlüssel zu berechnen, wobei die genannte Einwegfunktion den genannten Medienschlüssel mit einer durch einen Zahlengenerator erzeugten Nonce kombiniert, um einen Busschlüssel zu erzeugen, und wobei die genannte Verschlüsselungslogik die genannten Daten verschlüsselt, auf die unter Verwendung des genannten Busschlüssels auf über das genannte Speichermedium zugegriffen wird, bevor die verschlüsselten Daten über einen Datenbus übertragen werden.

19. Vorrichtung nach Anspruch 18, wobei diese ferner eine Host-Vorrichtung umfasst, die über den genannten Datenbus mit der genannten Speichervorrichtung gekoppelt ist, wobei die genannte Host-Vorrichtung eine Verarbeitungslogik, eine Einwegfunktion und eine Entschlüsselungslogik aufweist, wobei die genannte Verarbeitungslogik zumindest einen Teil des genannten Schlüsselverteilungs-Datenblocks unter Verwendung eines der genannten Host-Vorrichtung zugeordneten Vorrichtungsschlüssels verarbeitet, um einen Medienschlüssel zu berechnen, wobei die genannte Einwegfunktion den genannten Medienschlüssel mit der genannten durch den genannten Zahlengenerator erzeugen Nonce kombiniert, so dass ein Busschlüssel erzeugt wird, und wobei die genannte Entschlüsselungslogik die genannten über den Datenbus unter Verwendung des genannten Busschlüssels empfangenen verschlüsselten Daten entschlüsselt.

20. Vorrichtung nach Anspruch 18, wobei die genannten über den Datenbus übertragenen Daten unter Verwendung des Busschlüssels verschlüsselt werden, der auf der Basis der durch den Zahlengenerator erzeugten Nonce hergeleitet worden ist, so dass bei einer Aufzeichnung der genannten Daten zum Zeitpunkt der Übertragung die genannten aufgezeichneten Daten in der Folge nicht von einer Host-Vorrichtung wiedergegeben werden können, die keinen Zugriff auf die gleiche Nonce besitzt, die von der genannten Speichervorrichtung verwendet wird, um die genannten über den Datenbus übertragenen Daten zu verschlüsseln.

## Revendications

1. Système comprenant :
un générateur de nombres (136) pour générer un nonce (144) ; et
un sous-système de chiffrement (126) pour chiffrer les données accédées depuis un support de stockage (108) contenant un bloc de données de distribution de clé (110) en utilisant une clé de bus de chiffrement (124) avant de transmettre les données chiffrées via un bus de données (106), dans lequel ladite clé de bus de chiffrement est dérivée sur la base d'au moins une partie du bloc de données de distribution de clé, d'au moins une clé de dispositif (116) attribuée audit sous-système de chiffrement et du nonce généré par le générateur de nombres.

2. Système selon la revendication 1, comprenant en outre un sous-système de déchiffrement (142) couplé audit bus de données pour déchiffrer lesdites données chiffrées reçues sur le bus de données en utilisant une clé de bus de déchiffrement (140) dérivée sur la base d'au moins une partie du bloc de données de distribution de clé, d'au moins une clé de dispositif (130) attribuée audit sous-système de déchiffrement et du nonce généré par le générateur de nombres.

3. Système selon la revendication 1, dans lequel ledit sous-système de chiffrement comprend :
une logique de traitement (118) pour traiter au moins une partie du bloc de données de distribution de clé lu depuis le support de stockage en utilisant la au moins une clé de dispositif attribuée audit sous-système de chiffrement pour calculer une clé de support (120) ;
une fonction unidirectionnelle (122) pour générer la clé de bus de chiffrement sur la base de la clé de support et du nonce généré par le générateur de nombres ; et
une logique de chiffrement pour chiffrer les données accédées depuis ledit support de stockage en utilisant ladite clé de bus de chiffrement.

4. Système selon la revendication 2, dans lequel ledit sous-système de déchiffrement comprend :
une logique de traitement (132) pour traiter au moins une partie du bloc de données de distribution de clé lu depuis le support de stockage en utilisant la au moins une clé dispositif attribuée audit sous-système de déchiffrement pour calculer une clé de support (134) ;
une fonction unidirectionnelle (138) pour générer la clé de bus de déchiffrement sur la base de ladite clé de support et du nonce (146) généré par le générateur de nombres ; et
une logique de déchiffrement pour déchiffrer des données transmises sur le bus de données en utilisant ladite clé de bus de déchiffrement.

5. Système selon la revendication 1, dans lequel lesdites données transmises sur le bus de données sont chiffrées en utilisant la clé de bus dérivée sur la base du nonce généré par le générateur de nombres tel que si lesdites données sont enregistrées au moment de la transmission, lesdites données enregistrées ne sont pas subséquemment lisibles par un sous-système de déchiffrement qui n'a pas accès au même nonce que celui utilisé par ledit sous-système de chiffrement pour chiffrer lesdites données transmises sur le bus de données.

6. Système selon la revendication 2, dans lequel ledit bloc de données de distribution de clé est intégré sous la forme d'un Media Key Block comprenant un bloc de données chiffrées.

7. Système selon la revendication 2, dans lequel ledit sous-système de chiffrement est mis en oeuvre dans un dispositif de stockage (102) pouvant accéder aux données depuis un support de stockage et ledit sous-système de déchiffrement est mis en oeuvre dans un dispositif hôte (104) pouvant récupérer les données dudit dispositif de stockage.

8. Système selon la revendication 2, dans lequel ladite clé de support calculée par ledit sous-système de chiffrement sera la même que la clé de support calculée par le sous-système de déchiffrement à condition que ni la clé de dispositif attribuée au sous-système de chiffrement ni la clé de dispositif attribuée au sous-système de déchiffrement aient été compromises.

9. Système selon la revendication 2, dans lequel ledit support de stockage est choisi parmi un disque numérique polyvalent (en anglais « Digital Versatile Disk » - DVD), CD-ROM, disque optique, disque magnéto-optique, mémoire à base flash, carte magnétique et carte optique.

10. Système selon la revendication 2, dans lequel ledit générateur de nombres est un générateur de nombre aléatoire résidant dans ledit sous-système de déchiffrement.

11. Procédé comprenant :
un dispositif de stockage lisant un bloc de données de distribution de clé depuis un support de stockage ;
le dispositif de stockage traitant au moins une partie dudit bloc de données de distribution de clé en utilisant au moins une clé de dispositif pour calculer une clé de support ;
le dispositif de stockage extrayant un nonce généré par un générateur de nombres ;
le dispositif de stockage combinant ledit nonce avec ladite clé de support en utilisant une fonction unidirectionnelle pour générer une clé de bus ;
le dispositif de stockage chiffrant les données lues depuis le support de stockage en utilisant la clé de bus générée par le dispositif de stockage ; et
le dispositif de stockage transmettant les données chiffrées sur un bus de données.

12. Procédé selon la revendication 11, dans lequel lesdites données transmises sur le bus de données sont chiffrées en utilisant la clé de bus dérivée sur la base du nonce généré par le générateur de nombres afin que si lesdites données sont enregistrées au moment de la transmission, lesdites données enregistrées ne sont pas subséquemment lisibles par un dispositif hôte qui n'a pas accès au même nonce utilisé par le dispositif de stockage pour chiffrer lesdites données transmises sur le bus de données.

13. Procédé selon la revendication 11, comprenant en outre l'étape consistant à déchiffrer les données chiffrées reçues sur le bus de données.

14. Procédé selon la revendication 13, dans lequel ledit déchiffrement des données chiffrées reçues sur le bus de données comprend :
un dispositif hôte lisant le bloc de données de distribution de clé depuis le support de stockage ;
le dispositif hôte traitant au moins une partie du bloc de données de distribution de clé en utilisant au moins une clé de dispositif pour calculer une clé de support ;
le dispositif hôte extrayant le nonce généré par le générateur de nombres ;
le dispositif hôte combinant ladite clé de support avec le nonce en utilisant une fonction unidirectionnelle pour générer une clé de bus ; et
le dispositif hôte déchiffrant lesdites données chiffrées reçues sur le bus de données en utilisant la clé de bus générée par le dispositif hôte.

15. Procédé selon la revendication 14, comprenant en outre :
le dispositif hôte demandant une clé de désembrouillage requise pour désembrouiller le contenu brouillé depuis ledit dispositif de stockage ;
le dispositif de stockage chiffrant ladite clé de désembrouillage lue depuis ledit support de stockage avec ladite clé de bus générée par ledit dispositif de stockage et envoyant ladite clé de désembrouillage chiffrée au dispositif hôte ;
le dispositif hôte déchiffrant ladite clé de désembrouillage chiffrée reçue depuis ledit dispositif de stockage utilisant ladite clé de bus générée par ledit dispositif hôte ;
le dispositif hôte désembrouillant lesdites données déchiffrées en utilisant ladite clé de désembrouillage déchiffrée par ledit dispositif hôte.

16. Procédé selon la revendication 11, dans lequel ledit bloc de données de distribution de clé est intégré sous la forme d'un Media Key Block comprenant un bloc of données chiffrées.

17. Procédé selon la revendication 14, dans lequel ledit générateur de nombres est un générateur de nombre aléatoire résidant dans le dispositif hôte.

18. Appareil comprenant :
un dispositif de stockage pour accéder à un support de stockage contenant les données et un bloc de données de distribution de clé, ledit dispositif de stockage comprenant une logique de traitement, une fonction unidirectionnelle et une logique de chiffrement, dans lequel ladite logique de traitement traite au moins une partie dudit bloc de données de distribution de clé en utilisant une clé de dispositif attribuée audit dispositif de stockage pour calculer une clé de support, ladite fonction unidirectionnelle combine ladite clé de support avec un nonce généré par un générateur de nombres pour produire une clé de bus et ladite logique de chiffrement chiffre lesdites données accédées depuis ledit support de stockage en utilisant ladite clé de bus avant de transmettre les données chiffrées via un bus de données.

19. Appareil selon la revendication 18, comprenant en outre un dispositif hôte couplé audit dispositif de stockage via ledit bus de données, ledit dispositif hôte comprenant une logique de traitement, une fonction unidirectionnelle et une logique de déchiffrement, dans lequel ladite logique de traitement traite au moins une partie dudit bloc de données de distribution de clé en utilisant une clé de dispositif attribuée audit dispositif hôte pour calculer une clé de support, ladite fonction unidirectionnelle combine ladite clé de support avec ledit nonce généré par ledit générateur de nombres pour produire une clé de bus et ladite logique de déchiffrement déchiffre lesdites données chiffrées reçues sur le bus de données en utilisant ladite clé de bus.

20. Appareil selon la revendication 18, dans lequel lesdites données transmises sur le bus de données sont chiffrées en utilisant la clé de bus dérivée sur la base du nonce généré par le générateur de nombres afin que si lesdites données sont enregistrées au moment de la transmission, lesdites données enregistrées ne sont pas subséquemment lisibles par un dispositif hôte qui n'a pas accès au même nonce utilisé par ledit dispositif de stockage pour chiffrer lesdites données transmises sur le bus de données.
